Europäisches Patentamt

(19) European Patent Office

Office européen des brevets

(11) Publication number: **0 050 049**

A1

# (12) EUROPEAN PATENT APPLICATION

(21) Application number: **81400101.2**

(22) Date of filing: **26.01.81**

(51) Int. Cl.³: **B 60 B 17/00**

(30) Priority: **14.10.80 US 196649**

(43) Date of publication of application:
**21.04.82 Bulletin 82/16**

(84) Designated Contracting States:
**DE FR GB IT**

(71) Applicant: **THE SOUNDCOAT COMPANY, INC.**
**175 Pearl Street**
**Brooklyn New York 11201(US)**

(72) Inventor: **Kirschner, Francis**
**4 Beechwood Road**
**East Hills New York(US)**

(74) Representative: **Viard, Jean**
**CABINET VIARD 28 Bis Avenue Mozart**
**F-75016 Paris(FR)**

(54) Damping ring for rotating assemblies.

(57) A damping ring for rotating assemblies as a wheel or the like is achieved by providing an annular groove (42) in a surface of the wheel (30) which is coaxial with the axis of the wheel.

A viscoelastic damping material (44) subject to shear deformation during rotation of the wheel is positioned within the groove (42) against the surface of the groove, and an annular metal ring (46) is positioned in the groove (42) against the viscoelectric damping material with the damping material sandwiched between the ring (46) and the wheel (30). By way of example, the ring (46) may be U-shaped in cross-section.

FIG.4

EP 0 050 049 A1

DAMPING RING FOR ROTATING ASSEMBLIES

This invention relates to the damping of vibration, and more particularly to the damping of vibration in rotating devices. The invention has particular application to the attenuation of screech noise from railroad wheels.

Assemblies for damping vibration in rotating devices are known. Many involve the use of relatively heavy damping assemblies, which is undesirable from the standpoint of adding an additional load to the rotating device as well as safety. In the present invention, a lightweight damping assembly is provided.

One example of prior damping techniques is illustrated by Smith, U.S.Patent N° 2.267.311, issued 23 December 1941. That patent discloses use of a vibration-dampening member which is die-stamped from a sheet of steel and has the general configuration of the wheel to which it is attached. The present invention avoids the need to die-stamp sheet metal.

Another example of a prior damping assembly is Watter, U.S. Patent N° 2.605.132 issued 29 July 1952. In that patent, two metal rings with a thin annulus of rubber vulcanized thereto are employed as damping assembly which is force fitted onto a wheel. The force fitting requires a cooling of the ring by packing it in dry ice, e;g;,to cause the ring to shrink to a diameter permitting it to be installed on the wheel, following which the ring expands and is locked to the wheel as it returns to normal temperature. In the present invention, in contrast, vulcanizing of rubber and temperature treatment of a damping ring assembly for fitting that assembly to a wheel are not required.

The present invention involves a vibration damping assembly for a wheel or the like that includes an annular groove in a surface of the wheel and coaxial with the wheel axis. A viscoelastic damping material subject to shear deformation during rotation of the wheel is positioned within the groove against the surface of the groove, and an annular metal ring is positioned in the groove against the viscoelastic damping material, with the damping material sandwiched between the ring and wheel. In one form of the invention, the ring is circular in cross section; in another form, the ring is U-shaped in cross section. These shapes are exemplary.

The invention will be more completely understood by reference to the following detailed description, illustrated by the drawings on which :
- Fig.1 is a plan view of a railroad wheel incorporating one damping ring embodying the invention;
- Fig.2 is a side view of the railroad wheel of Fig. 1, partly in section;
- Fig.3 is an enlarged view of a portion of Fig.2;
- Fig.4 is a perspective view, in section, of a portion of a railroad wheel incorporating another damping ring and embodying the invention;
- Fig.5 is a side view, to an enlarged scale, of a portion of the section shown in Fig.4;
- Fig.6 is a perspective view of the end of an annular metal ring used in the assembly of Fig.4 (to an enlarged scale).

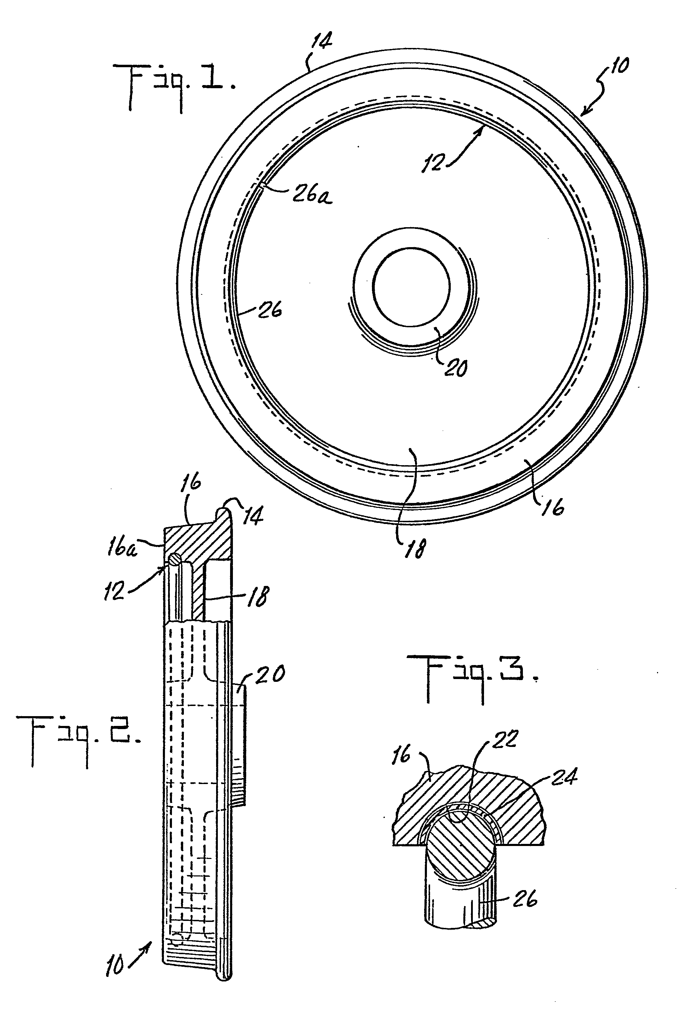

Referring to Fig.1, a railroad wheel 10 is shown that has affixed thereto a vibration damping assembly 12 in accordance with the invention. The wheel includes a flange portion 14, a rim portion 16, a web portion 18 and a hub portion 20. The vibration damping assembly 12 is positioned in the rim portion 16 of the wheel, as shown in Figs. 2 and 3 in detail. An annular groove 22 is formed in the rim portion 16 of the wheel, typically by machining, and preferably in an inside surface of the wheel. By so positioning groove 22 in the wheel, possible damage to the vibration damping assembly 12 is avoided. because the damping assembly is thereby positioned on an inside wheel surface. A viscoelastic damping material 24 is positioned within the groove 22, and this is generally in thin sheet form within the groove. The viscoelastic damping material may be adhesively secured in place within the groove, such as by use of a flexible epoxy adhesive. Next, an annular
metal ring 26, preferably of spring steel, is "snapped" into
place in the groove, positioned against the viscoelastic
damping material 24. Preferably, the ring 26 is adhesively
secured to the viscoelastic damping material, such as by use
of a flexible epoxy adhesive. As shown in Fig.1, the ends of
the ring 26 are generally spaced-apart from each other, as
shown at 26a. If desired, the ends of the ring may be welded
together.

In the railroad wheel and damping assembly just described, the
wheel itself is typically about twentyeight inches ( 72 centimeters) in diameter, and approximately five hundred pounds
( 227 Kg.) in weight. The damping ring26 is preferably of
tempered, spring steel, and may be of the same steel of the
railroad wheel 10. The ring may be one-half inch (1,27 cm.) in
cross-sectional diameter for a wheel as just specified. The
viscoelastic damping material may be any suitable damping
material which is subject to shear deformation during rotation
of the wheel. A suitable product is manufactured by the
Soundcoat Company, Inc., of 175 Pearl Street, Brooklyn,
New York 11201, United States of America, under product
designation of DYAD. Bulletin 701, published by the Soundcoat
Company, Inc. and entitled "Soundcoat Product Data Sheet,
DYAD For Use in Thick Plate Vibration Damping" describes DYAD
material and applications. Further Soundcoat Company Publications describing viscoelastic damping material applications
are as follows:

> " Materials for Constrained-Layer Damping"
> " New Materials for Vibration Damping Control" by
> F. Kirschner, and published in Inter-Noise 75.
> "New Developments In The Control of Railroad
>   Wheel Screech Noise" by Francis Kirschner, and
>   published in Inter-Noise 72 Proceedings.

The viscoelastic material is, as noted above, applied in sheet
form and is typically fifty mils ( 0,127 cm.) in thickness
for a railroad wheel of the type specified above. As noted,
this viscoelastic damping materialis preferably adhesively
secured to the wheel as well as to the damping ring 26.

4

A suitable adhesive is a flexible epoxy adhesive sold by The Soundcoat Company,Inc., under its product designation "Soundcoat B-Flex Epoxy" described in "Application Instructions of Soundcoat B-Flex Epoxy" published by The Soundcoat Cy.

It is believed that vibration damping will be enhanced if adhesive is used, as noted, although adhesive may be dispensed with, if desired. Thus, it is possible to omit the adhesive bond between the viscoelastic damping layer 24 and wheel 10 and/or the adhesive bond between the viscoelastic damping layer and the ring 26.

The ring 26, as noted, is "snapped" in place. The cross-sectional diameter of the ring 26 is slightly less than that of the groove 22 in the wheel. The diameter of the ring annulus is such as to permit the "snapping" into place of the ring and its positioning in place under spring tension. While it is not believed necessary to weld the ring in place, spot welding of the ends of the ring, as at 26a in Fig.1, may be completed as noted above. In addition, it is possible to spot weld the ring 26 to various portions of the wheel 10 around the periphery of the ring, if desired. However, it is presently believed desirable not to weld the ring in place.

A damping assembly 12 as described above generally might weigh no more than about 4 1/4 pounds ( 1,93 Kg.), the weight of the steel ring 26. This compares with a wheel of about 500 pounds (227 Kg.) in weight and hence the damping assembly is virtually a negligible weight addition to the wheel ( less than 1% by weight).

Altough damping rings such as ring 26 have been employed before, they have been used alone in a system in which in which they are snapped in to place in a railroad wheel. Such a system is strictly a friction type system, and the vibration damping characteristics of such a system have been non-uniform because of the lubrication taking place between ring and wheel as caused by oil and grease between ring and wheel as well as rust between the two, which acts as a lubricant.

In the present invention, by utilizing the viscoelastic damping material between the ring and wheel, a three-layer damping system is provided, consisting of wheel, viscoelastic material, and spring metal ring. Such a damping assembly is greatly preferable to the friction type ring/wheel damping assemblies used beforehand because of the added benefit of viscoelastic damping and an avoidance of friction damping. The system is economical and safe, and it is not subject to being easily damaged by virtue of the positioning of the damping assembly in an inside surface of the wheel. Such a viscoelastic damping system, when optimized, may provide between about 20 to 26 decibels of attenuation in a friction damping system as noted above.

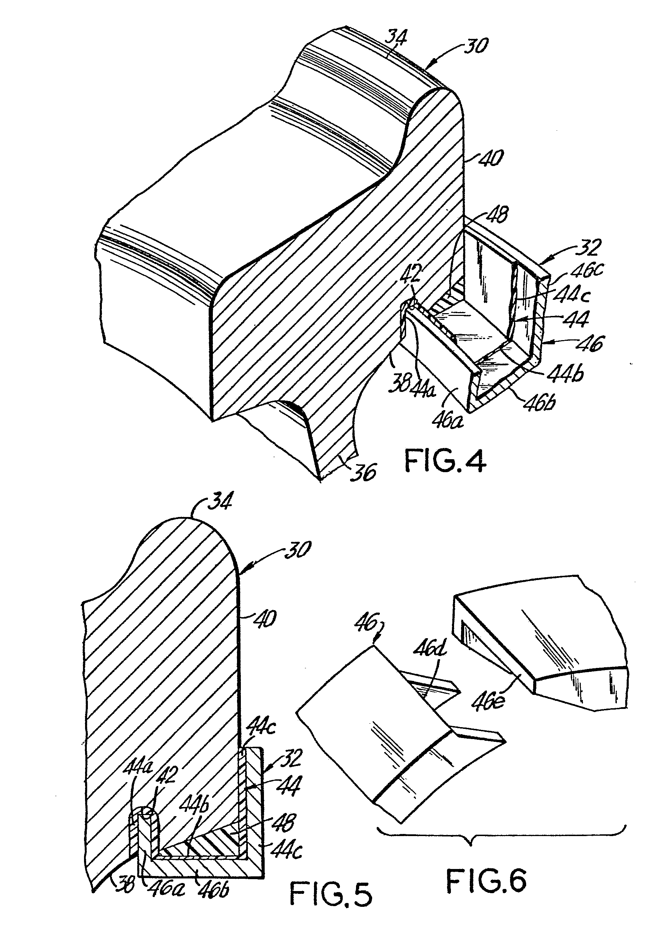

Referring to Fig.4, a rairoad wheel 30 is shown that has affixed thereto another vibration damping assembly 32, also in accordance with the invention. The wheel includes a flange portion 34, a web portion 36, an inner rim portion 38, and an outer rim portion 40. The vibration damping assembly 32 is positioned in the rim portion of the wheel, as shown.

An annular groove 42 is formed in the inner rim portion 38 of the wheel, typically by machining (see Figs. 4 and 5). A viscoelastic damping material 44a is positioned within the groove 42, and substantially encases one leg 46a of a channel member 46 which is generally U-shaped in cross section. Base portion 46b and the other leg 46c of the channel member extend close to areas of the wheel that are adjacent to the groove 42. In particular, the base portion 46b extends outwardly to the edge of the wheel, while the leg 46c extends adjacent to the outer rim portion 40. These portions of the channel member 46 sandwich vibration damping material between themselves and the adjacent portions of the wheel. In particular, the vibration damping material 44 may extend along base portion 46b and leg 46c, as at 44b and 44c. Other vibration damping material 48 may be included sandwiched between the vibration damping material 44b and the adjacent inner rim portion 38 of the wheel.

0050049

Typically, the damping assembly 32 may be formed by first positioning damping material 48 in place against the wheel, followed by damping material 44a,44b,and 44c. Next, the channel member 46, which is annular and of metal, preferably of spring steel, is "snapped" in place. The ring 46 may be cut so as to include two discrete ends 46d and 46e shown in Fig.6, cut and shaped as shown to interfit one against the other. These ends may abut each other, they may be spaced slightly apart, and they may be welded together, as desired in the final assembly.

In the railroad wheel and damping assembly just described, the wheel itself is typically about 28 inches (72 cm.) in diameter and approximately 500 pounds (227 Kg.) in weight. The channel member 46 is preferably of tempered, spring steel, and may be of the same steel as that of the railroad wheel 10. The width of the base 46b of the channel member may be of one and half inches (3,81 cm.)and the height of the leg 46c may be the same. The leg 45a may be 3/4 inch (1,9 cm.) in height, while the annular groove 42 may extend inwardly into the inner rim area 38 by about 9/16 inch ( 1,43 cm), with a rounded inner radius of about 1/2 inch ( 1,27 cm.). These dimensions are given by way of example only.

The damping material 44a, 44b, and 44c may preferably be viscoelastic damping material subject to shear deformation during rotation of the wheel. A suitable product is DYAD, noted above. The damping material 48 preferably may be a 100 % solid epoxy resin with a mixture of inorganic fillers. An example of such a resin is "Epoxy 10", a product made by The Soundcoat Company, Inc.. Such a material is described in Bulletin 705 published by the Soundcoat Cy and entitled "Epoxy-10 Vibration Damping Compound". The damping material 48 may itself serve as an adhesive, bonding itself to the vibration damping material 44a,44b, and 44c in contact therewith as well as to the rim portion 38 of the wheel. It also serves as a temperature insulating medium. The material 48 is, however a vibration damping material which acts in tension and compression in a mode transverse to the direction of rotation of the wheel. In making the damping assembly 32, it is preferable to coat the channel 42 and the inner and outer rim areas 38 and 40 with an adhesive material. A suitable adhesive is a flexible epoxy adhesive such as "Soundcoat B-Flex Epoxy" noted above. The adhesive layer serves to hold the damping layer 44 of the viscoelastic damping material in place. Additionally, it serves to bond the damping material to the wheel. That damping layer as well as the damping material 44a, 44b, and 44c may itself be coated with adhesive material, of the type just described, so that all elements of the assembly are firmly bonded together to create a sandwich of damping materials and channel member.

The damping assembly 32 as described above generally may weigh no more than about 12 pounds ( 5,44 Kg.), the weight of the channel member 46. This compares with a wheel weight of about 500 pounds ( 227 Kg.), and hence the damping assembly is virtually a negligible weight addition to the wheel (less than about 2,5% by weight).

In the case of the assembly of Figs.4-6, by sandwiching damping material beneath the entire channel member, greater vibration damping is achieved than possible through the use only of vibration damping material within the annular groove as in the assembly of Figs. 1-3. The damping assembly is firmly positioned on the wheel, and is not subject to being damaged or disloged easily by external forces, and so may extend beyond the plane of the edge of the wheel.

Presently preferred embodiments of the invention have been described in detail above. The damping systems disclosed may be optimized in terms of frequency, temperature, and geometrical configuration. The publications noted above are of assistance in optimizing the damping treatment in any particular application.

In view of the above, the invention should be taken to be de defined by the following claims.

Claims.

1 A vibration damping assembly for a wheel or the like that undergoes rotation, comprising an annular metal ring fitted onto the wheel, characterized in that an annular groove coaxial with the axis of said wheel is formed in a surface of said wheel, said annular metal ring being positioned in said groove with a viscoelastic damping material subject to shear deformation during rotation of said wheel positioned within said groove against the surface of said groove, said damping material being sandwiched between said ring and said wheel.

2. A vibration damping assembly according to claim 1, characterized in that said viscoelastic damping material is adhesively secured to said wheel.

3. A vibration damping assembly according to claim 1, characterized in that said viscoelastic damping material is adhesively secured to said annular ring.

4. A vibration damping assembly according to claim 1, characterized in that said viscoelastic damping material is adhesively secured to said wheel and to said annular ring.

5. A vibration damping assembly according to claim 4, characterized in that said viscoelastic damping material is adhesively secured to said wheel and to said annular ring by a flexible epoxy adhesive.

6. A vibration damping assembly according to claim 5, characterized in that said annular groove is positioned in an inside surface of said wheel in a plane spaced from the plane defined by the outer edge of said wheel, said annular ring being of spring steel and the cross section of said annular ring being generally circular.

7. A vibration damping assembly according to claim 1, characterized in that said annular metal ring is formed from a

**0050049**

channel member generally U-shaped in cross-section, one of the legs of said channel member being positioned within said groove and substantially encased therein by said viscoelastic damping material, the remainder of said channel member extending close to areas of said wheel that are adjacent to said groove, and vibration damping material being sandwiched between said adjacent areas of said wheel and said remainder of said channel member.

8. A vibration damping assembly according to claim 7, characterized in that at least some of said damping material comprises a sandwich of a first material which is subject to deformation in tension and compression and a second material which is subject to shear deformation during rotation of said wheel.

9. A vibration damping assembly according to claim 7, characterized in that said wheel includes inner and outer rim areas, said annular groove is positioned within inner rim area of said wheel, and the other leg of said U-shaped channel member extends adjacent to said outer rim area of said wheel.

10. A vibration damping assembly according to claim 9, characterized in that it includes viscoelastic material, subject to shear deformation, positioned between said outer rim area of said wheel and said other leg of said U-shaped channel member.

11. A vibration damping assembly according to claim 10, characterized in that it includes vibration damping material subject to deformation in tension and compression positioned between the base of said U-shaped channel member and said inner rim area of said wheel.

12. A vibration damping assembly according to claim 11, characterized in that viscoelastic material subject to shear deformation is sandwiched between said vibration damping material and said base of said U-shaped channel member.

13. A vibration damping assembly according to claim 12, characterized in that said annular metal ring is non-continuous and includes mating ends.

Fig.1.

Fig.2.

Fig.3.

FIG.4

FIG.5

FIG.6

**0050049**

Application number

EP 81 40 0101

European Patent
Office

**EUROPEAN SEARCH REPORT**

## DOCUMENTS CONSIDERED TO BE RELEVANT

| Category | Citation of document with indication, where appropriate. of relevant passages | Relevant to claim |
|---|---|---|
| A | <u>DE - A - 1 605 832</u> (KLOCKNER-WERKE) <br> * Page 5, lines 10-14; figure 1 * | 1 |
| A | <u>US - A - 1 804 906</u> (WEMP) <br> * Page 1, line 88 - page 2, line 7; figures 1,3,6 * | 1 |
| A | <u>US - A - 3 377 097</u> (SWANSON) <br> * Column 2, line 56 - column 3, line 37; figures 1,2 * | 1 |

CLASSIFICATION OF THE
APPLICATION (Int Cl ³)

B 60 B 17/00

TECHNICAL FIELDS
SEARCHED (Int Cl ³)

B 60 B 17/
B 60 B 3/
F 16 F 15/

CATEGORY OF
CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 10-07-1981 | AYITER |

EPO Form 1503.1  06.78